# EUROPÄISCHE PATENTANMELDUNG

(11) **EP 1 939 997 A2**
(43) Veröffentlichungstag der Anmeldung: **02.07.2008**
(21) Anmeldenummer: 07123318.3
(22) Anmeldetag: 17.12.2007
(51) Int. Cl.: H02H 3/347

(54) **Ableitstromfester Fehlerstromschutzschalter**

(30) Priorität: 27.12.2006 DE 102006062320
(71) Anmelder: SIEMENS AKTIENGESELLSCHAFT, 80333 München (DE)
(72) Erfinder: Luber, Georg, 93158, Teublitz (DE); Rudnik, Siegfried, 90587, Tuchenbach (DE)

(57) **Zusammenfassung**

Es soll ein gegen Funktionserdströme unempfindlicher Fehlerstromschutzschalter bereitgestellt werden. Daher wird vorgeschlagen, in dem Fehlerstromschutzschalter (RCD1) neben mindestens einem Phasenleiter (L1, L2, L3) und einem Nullleiter (N) einen Funktionsableiter (FE) zum Ableiten eines Funktionsableitstroms durch den Summenstromwandler zu führen. Dadurch löst der Fehlerstromschutzschalter nicht aus, wenn beispielsweise für EMV-Maßnahmen Funktionsableitströme auftreten.

## Beschreibung

Die vorliegende Erfindung betrifft einen Fehlerstromschutzschalter mit mindestens einem Phasenleiter, einem Nullleiter und einem Summenstromwandler zum Erfassen eines Summenstroms durch den Phasenleiter und den Nullleiter. Darüber hinaus betrifft die vorliegende Erfindung ein Versorgungssystem mit mindestens einem Phasenleiter und einem Nullleiter sowie einer Funktionserde und einer Schutzerde. Ferner betrifft die vorliegende Erfindung ein entsprechendes Verfahren zum Detektieren eines Fehlerstroms.

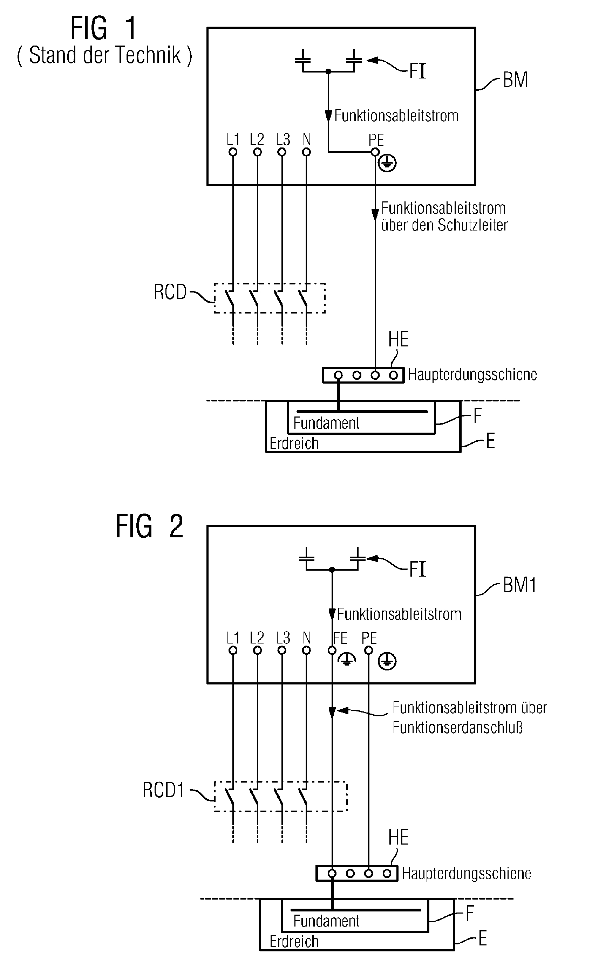

Durch den vermehrten Einsatz von Leistungselektronik, welche hauptsächlich aus EMV-Gründen eine Verbindung mit Erde zu Entstörzwecken (Funktionserde) benötigt, wird der Schutzleiter zusätzlich zu seiner Schutzfunktion vermehrt als EMV-Erde missbraucht. Ein derartiges Versorgungssystem ist in FIG 1 dargestellt. Entsprechend diesem Beispiel wird ein Betriebsmittel BM über drei Phasen- bzw. Außenleitern L1, L2 und L3 sowie einem Nullleiter N betrieben. Die Außenleiter L1 bis L3 und der Nullleiter N werden durch einen Fehlerstromschutzschalter RCD und weiter zu einem entsprechenden Versorgungssystem geführt. Im Falle eines Fehlerstroms öffnet der Fehlerstromschutzschalter RCD den Stromkreis. Zur Detektion des Fehlerstroms summiert der Fehlerstromschutzschalter RCD die Ströme in den Leitern L1, L2, L3 und N auf. Ist diese Summe ungleich 0, so ist dies ein Zeichen dafür, dass Strom über einen anderen Weg von dem Betriebsmittel BM abfließt und der Fehlerstromschutzschalter RCD löst aus.

Das Betriebsmittel BM verfügt ferner über einen Schutzleiteranschluss PE. Dieser ist mit einer Haupterdungsschiene HE verbunden, welche ihrerseits elektrisch mit einem Fundament F verbunden ist. Dieses ist in dem Erdreich E eingebettet. Falls nun beispielsweise das Gehäuse des Betriebsmittels mit einem der Leiter L1, L2, L3 oder N kurzgeschlossen wird, so kann der Strom über den Schutzleiter PE nach Erde abfließen.

Weiterhin besitzt das Betriebsmittel BM im Beispiel von FIG 1 Filter FI als EMV-Maßnahme. Durch das Filter wird ein Strom gegen Erde hervorgerufen. Diesen Funktionsableitstrom gilt es zu erden. Wie oben bereits angedeutet wurde, wird er vielfach über den Schutzleiter PE geerdet (vgl. FIG 1). Damit wird jedoch ein Teil des Stroms aus dem L1-L2-L3-N-System über den Schutzleiter PE abgeleitet, wodurch ein Fehlerstrom entsteht. Bei derartigen Anordnungen wird somit der Einsatz eines Fehlerstromschutzschalters mit kleinen Nennfehlerströmen, z. B. zum Personenschutz, unmöglich.

Vielfach wird daher ganz auf Fehlerstromschutzschalter verzichtet, womit kein Personenschutz mehr gegeben ist. Alternativ ist für den Funktionsableitstrom eine eigene Leitung mit großem Querschnitt zusätzlich erforderlich.

Aus der Gebrauchsmusterschrift DE 200 02 457 U1 ist ein FI-Schutzschalter bekannt, der mithilfe einer Elektronik einstellbar ist und somit empfindlicher gemacht werden kann. Dadurch können Nennfehlerströme von 2 bis 30 mA primärseitig erkannt werden. Da der Schalter nun sehr stark zu Fehlauslösungen neigen würde, wird eine Elektronik eingesetzt, welche die üblichen Ableitströme berücksichtigt und nur bei Fehlerströmen gegen Erde reagiert. Dieser Schutzmechanismus funktioniert allerdings nur mit Strömen gegen Erde. Berührt beispielsweise ein Mensch die Phase L1 mit der einen Hand und mit der anderen ein Metallgehäuse eines Geräts, das an Schutzerde liegt (dies sind beispielsweise alle geerdeten Haushaltsgeräte wie Wasserkocher, Waschmaschine, Boiler, Herd, Geschirrspüler, Trockner usw.), so funktioniert diese Fehlerstromschutzeinrichtung nicht. Sie arbeitet, wie gesagt, nur bei Fehlerströmen gegen Erde, die über bestimmte Erdungsstellen fließen. Dabei ist allerdings der Erdungswiderstand zufällig und nicht definiert.

Weiterhin ist aus der Patentschrift DE 34 02 028 C2 eine Schutzschaltung für ein Sicherheitsgerät zur Erhöhung des Schutzpegels bekannt. Ein Schutzleiterstromkreis wird bei der Auslösung der Schutzschaltung mit berücksichtigt.

Des Weiteren beschreibt die Druckschrift DE 10 93 466 eine elektrische Sicherheitsschaltung, bei der ein Fehlerstromschutzschalter eine geringe, nicht tödlich wirkende Auslöse-Fehlerstromstärke besitzt und der Schutzleiter ebenfalls mit durch den Summenwandler des Fehlerstromschutzschalters geführt wird.

Aus der europäischen Norm prHD60364-5-54 S2:2005 ist im Kapitel 542.4 eine Haupterdungsschiene gefordert, die mit einem Schutzpotenzialausgleichsleiter, einem Erdungsleiter, einem Schutzleiter und gegebenenfalls mit einem Funktionserdungsleiter verbunden werden kann. Die Haupterdungsschiene eines Gebäudes soll also auch grundsätzlich für Funktionserdungszwecke verwendet werden können. Im Kapitel 543.5 dieser Norm ist auch angesprochen, dass gemeinsame Schutzerdungs- und Funktionserdungsleiter verwendet werden können, falls diese die Anforderungen für Schutzleiter erfüllen. In Kapitel 543.7 sind die entsprechenden Anforderungen an Schutzleiter definiert. Darüber hinaus ist dort angegeben, dass Verbrauchsmittel mit normalerweise hohem Schutzleiterstrom in Anlagen mit Fehlerstrom-Schutzeinrichtungen (RCD) nicht verträglich sein können. Gerade Verbrauchsmittel, die einen hohen Funktionsableitstrom hervorbringen, sind davon betroffen.

Die Aufgabe der vorliegenden Erfindung besteht somit darin, Verbrauchs- bzw. Betriebsmittel auch dann sicher betreiben zu können, wenn sie einen hohen Funktionsableitstrom haben.

Erfindungsgemäß wird diese Aufgabe gelöst durch einen Fehlerstromschutzschalter mit mindestens einem Phasenleiter, einem Nullleiter und einem Summenstromwandler zum Erfassen eines Summenstroms durch den Phasenleiter und den Nullleiter, sowie einem Funktionsableiter zum Ableiten eines Funktionsableitstroms, der ebenfalls durch den Summenstromwandler geführt wird und dort zu dem Summenstrom beiträgt.

Darüber hinaus wird erfindungsgemäß bereitgestellt ein Verfahren zum Detektieren eines Fehlerstroms durch Erfassen eines Summenstroms aus mindestens einem Phasenleiterstrom, einem Nullleiterstrom und einem Funktionsableitstrom (d. h. ohne Schutzleiterstrom) und Gewinnen eines Fehlerstromsignals aus dem Summenstrom.

In vorteilhafter Weise können somit auch in Anlagen mit Funktionsableitströmen Fehlerstromschutzschalter eingesetzt werden, so dass der Personenschutz verbessert werden kann.

Die vorliegende Erfindung ist anhand der beigefügten Zeichnungen näher erläutert, in denen zeigen:
- FIG 1: eine elektrische Anlage mit einem Fehlerstromschutzschalter gemäß dem Stand der Technik und
- FIG 2: eine elektrische Anlage mit einem Fehlerstromschutzschalter gemäß der vorliegenden Erfindung.

Das nachfolgend näher geschilderte Ausführungsbeispiel stellt eine bevorzugte Ausführungsform der vorliegenden Erfindung dar.

Die elektrische Anlage gemäß dem Beispiel von FIG 2 nutzt zwei Erdungssysteme: die Funktionserde FE, welche z. B. die EMV-Ströme aufnimmt, und die Schutzerde PE. Das Betriebsmittel BM1 besitzt wie dasjenige von FIG 1 Anschlüsse für die Außenleiter L1, L2 und L3 sowie den Nullleiter N. Darüber hinaus besitzt es wie im obigen Beispiel eine Schutzerde PE, die mit der Haupterdungsschiene HE und damit dem Fundament F verbunden ist, welches seinerseits im Erdreich E eingebettet ist. Die Funktionserde FE ist ebenfalls mit der Haupterdungsschiene HE verbunden. Damit können Funktionsableitströme der als EMV-Maßnahme vorgesehenen Filter FI über die Funktionserde FE abfließen. Der Schutzleiter PE ist von dem Funktionsableitstrom nicht betroffen.

Ein Fehlerstromschutzschalter RCD1 erfasst mit seinem Summenstromwandler nicht nur die Außenleiter L1, L2 und L3 sowie den Nullleiter N, sondern auch den Funktionserdeanschluss FE. Damit werden in dem Fehlerstromschutzschalter RCD1 auch EMV-Ströme aufgenommen. Der Summenstromwandler summiert also gemäß dem folgenden Term: L1+L2+L3+N+FE. Ist diese Summe ungleich 0, so löst die Fehlerstromschutzeinrichtung aus und öffnet den Stromkreis.

Mit dem erfindungsgemäßen Fehlerstromschutzschalter ist also sichergestellt, dass selbst bei EMV-Strömen oder anderen Funktionsströmen die Summe der Ströme im Summenstromwandler 0 ist und kein Fehlauslösen erfolgt. Damit ist andererseits gewährleistet, dass alle Arten von Fehlern erfasst werden, nämlich die gegen Erde, aber auch beispielsweise die gegen ein über den Schutzleiter PE geerdetes Metallgehäuse.

In vorteilhafter Weise ist damit eine einfach aufgebaute Fehlerstromschutzeinrichtung ohne weitere Zusatzelektronik realisierbar. Außerdem kann eine netzspannungsunabhängige Fehlerstromschutzschaltung bereitgestellt werden, wie sie in einschlägigen Normen gefordert wird. Diese Fehlerstromschutzeinrichtung ist unempfindlich gegen Funktionserdströme bei voller Aufrechterhaltung der Schutzfunktion.

## Patentansprüche

1. Fehlerschutzschalter mit
- mindestens einem Phasenleiter (L1, L2, L3),
- einem Nullleiter (N) und
- einem Summenstromwandler zum Erfassen eines Summenstroms durch den Phasenleiter (L1, L2, L3) und den Nullleiter (N), **gekennzeichnet, durch**
- einen Funktionsableiter (FE) zum Ableiten eines Funktionsableitstroms, der ebenfalls **durch** den Summenstromwandler geführt wird und dort zu dem Summenstrom beiträgt.

2. Fehlerstromschutzschalter nach Anspruch 1, der drei Phasenleiter (L1, L2, L3) besitzt.

3. Versorgungssystem mit mindestens einem Phasenleiter (L1, L2, L3) und einem Nullleiter (N) sowie einer Funktionserde und einer Schutzerde, wobei der mindestens eine Phasenleiter (L1, L2, L3), der Nullleiter (N) und die Funktionserde durch den Fehlerstromschutzschalter (RCD, RCD1) nach einem der vorhergehenden Ansprüche durchgeführt und der Schutzleiter daran vorbeigeführt ist.

4. Verfahren zum Detektieren eines Fehlerstroms durch
- Erfassen eines Summenstroms aus mindestens einem Phasenleiterstrom (L1, L2, L3), einem Nullleiterstrom (N) und einem Funktionsableitstrom und
- Gewinnen eines Fehlerstromsignals aus dem Summenstrom.
